(19) Europäisches Patentamt
European Patent Office
Office européen des brevets

(11) **EP 4 036 288 A1**

(12) **EUROPEAN PATENT APPLICATION**
published in accordance with Art. 153(4) EPC

(43) Date of publication:
**03.08.2022 Bulletin 2022/31**

(21) Application number: **20869990.0**

(22) Date of filing: **23.09.2020**

(51) International Patent Classification (IPC):
***D01F 6/70*** *(2006.01)*

(52) Cooperative Patent Classification (CPC):
**D01F 6/70**

(86) International application number:
**PCT/JP2020/035846**

(87) International publication number:
**WO 2021/060292 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2019 JP 2019173396**

(71) Applicant: **Asahi Kasei Kabushiki Kaisha Tokyo 1000006 (JP)**

(72) Inventor: **IWANAMI, Taisuke Tokyo 100-0006 (JP)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **RECYCLED POLYURETHANE ELASTIC FIBER, METHOD OF PRODUCING SAME, FIBER STRUCTURE CONTAINING SAID RECYCLED POLYURETHANE ELASTIC FIBER, GATHER MEMBER, AND SANITARY MATERIAL**

(57) Provided are: a recycled polyurethane elastic fiber that can be used for diverse purposes despite being a recycled item; a method of producing same; a fiber structure containing said recycled polyurethane elastic fiber; a gather member; and a sanitary material. The present invention pertains to a recycled polyurethane elastic fiber for which raw-material polyurethane elastic fiber is used as a raw material, wherein the recycled polyurethane elastic fiber is characterized in that the recycled polyurethane elastic fiber has a reduced viscosity of 1.00 or more, and the total amount of mineral oil and silicone oil remaining in the fiber interior after the recycled polyurethane elastic fiber has been rinsed with petroleum ether is 10 wt% or less with respect to the fiber weight after the rinsing. The present invention also pertains to: a method of producing the recycled polyurethane elastic fiber; a fiber structure containing said recycled polyurethane elastic fiber; a gather member; and a sanitary material.

FIG. 1

EP 4 036 288 A1

**Description**

FIELD

The present invention relates to a recycled polyurethane elastic fiber, a method for the production thereof, a fiber structure, a gather member, and a sanitary material comprising the recycled polyurethane elastic fiber.

BACKGROUND

Due to the excellent elasticity thereof, polyurethane fibers are used in various products by mixing with other fibers. Examples include, among others, socks, swimwear, clothing and hygiene products such as diapers. The demand therefor is increasing year by year, which means that the demand for polyols and isocyanates, which are raw materials thereof, and diamines and diols, which are chain extenders, is also increasing.
However, the depletion of petroleum resources and global warming have become serious problems recently, and the movement toward a sustainable society is becoming active.
From the perspective of sustainability, for example, production activities using carbon-neutral-oriented bio-raw materials are one of the major means of achievement.
The amount of trash and waste generated increases as wealth increases, and the shortage of disposal sites and treatment plants as well as environmental pollution have long since become major problems. Thus, efforts for the 3 Rs-curbing the generation of waste (Reduce), proper reuse of used products (Reuse), and the ultimate Recycling-can also be extremely effective means for realizing a sustainable society.
In such a trend, Patent Literature 1 below proposes a technology for producing 1,4-butanediol, which can serve as a raw material for polyols, from edible biomass raw material, and polyurethane elastic fiber using a polyol via this 1,4-butanediol. However, at present, there are problems such as the very high cost of producing the butanediol and the fact that the biomass is edible rather than inedible, and as such, this technology has not been widely adopted in the world so far.
Furthermore, Patent Literature 2 reports a manufacturing method for reusing polyurethane elastic fiber itself. However, in this technology, the manufacturing method is specified in extremely fine detail by, for example, yarn aging, crushing, and moisture content control, and the energy required for such processes cannot be ignored.
Patent Literature 3 below also reports a method of utilizing dope waste liquid generated during production. However, this method requires the addition of a diol, diisocyanate, amine, etc., again, which is no longer different from conventional production. In either case, the stability and variation of the final physical properties remain questionable.

[CITATION LIST]

[PATENT LITERATURE]

[PTL 1] Japanese Unexamined PCT Publication (Kohyo) No. 2017-519121
[PTL 2] Chinese Unexamined Patent Publication No. 106757490
[PTL 3] Chinese Unexamined Patent Publication No. 108517580

SUMMARY

[TECHNICAL PROBLEM]

In light of the prior art described above, an object of the present invention is to provide a recycled polyurethane elastic fiber which can be used for general purposes even though it is a recycled product, a method of producing the same, a fiber structure, a gather member, and a sanitary material comprising the recycled polyurethane elastic fiber.

[SOLUTION TO PROBLEM]

In general, polyurethane elastic fibers are fibers which easily stick because they have viscoelasticity. In particular, in the inner layer portion of the winding body, sticking progresses over time due to the pressure applied during winding. Thus, when the elastic fiber wound body is used, the unwinding is poor and the yarn breaks. In order to improve this poor unwinding, in the spinning process, a so-called oil agent is applied and the yarn is then wound into a cheese shape to form a wound body (hereinafter, also sometimes referred to as cheese). When preparing recycled polyurethane elastic fibers via a dope solution with these polyurethane elastic fibers as part of raw material, unless special treatment is applied, the oil agent contained in the raw material, and in particular, silicone oil and mineral oil as its main components, as they are, will be brought into the recycled polyurethane elastic fibers, and will act as an internal oil agent for the recycled polyurethane elastic fibers. However, the internal oil agent has low compatibility with the polyurethane urea polymer, and if the amount is large, it becomes a factor of deteriorating the physical properties. Furthermore, if the yarn is not a monofilament yarn, the filaments thereof may be separated from each other due to a decrease in cohesiveness. Furthermore, depending on the characteristics of the polyurethane elastic fibers of the raw material and the conditions at the time of dope preparation, the reduced viscosity of the recycled polyurethane elastic fibers may decrease. This also raises concerns regarding deterioration of the physical properties and resistance to heat treatment during processing.

Furthermore, it is known that the profile of polyurethane elastic fibers, such as the physical properties and characteristics thereof, hard domain ratio and molecular weight, differ greatly depending on the slight differences in the amount ratios of the raw material polyol, isocyanate and chain extender and the amount of heat received. Conversely, in order to recycle polyurethane elastic fibers as a dope raw material for dry or wet spinning, it is necessary to redissolve them in a solvent. At that time, if polyurethane elastic fibers having different profiles as described above are used, those having a large molecular weight or a large ratio of hard domains or those having a large cross-linked structure sometimes remain without being dissolved. When there is a large amount of undissolved residue, even if the residue is filtered in the process, the filter will be clogged immediately, whereby production efficiency will be extremely poor and it will not be able to withstand actual production. Though dissolution by heating may be possible, if high temperatures are required, the side effect of lowering the molecular weight may occur due to the cleavage of polyurethane molecules, which affects the yarn performance and physical properties after spinning. Conversely, polyurethane elastic fibers with an excessively small molecular weight or hard ratio and those with few crosslinked structures easily dissolve, but they also cause deterioration of physical properties after spinning. Generally, 22 dtex polyurethane elastic fibers, for example, when having a breaking strength of 25 cN or more and a breaking elongation of 550% or more as the physical properties thereof, can be used for general purposes.

As a result of rigorous investigation, the present inventors have discovered that a recycled polyurethane elastic fiber with a certain amount of an internal oil agent (total content of mineral oil and silicone oil) and reduced viscosity has the same physical properties as polyurethane elastic fiber spun using ordinary virgin polymer, and have completed the present invention.

Specifically, the present invention is as described below.

[1] A recycled polyurethane elastic fiber from raw material polyurethane elastic fibers used as a raw material, wherein a reduced viscosity of the recycle polyurethane elastic fiber is 1.00 or more, and a total amount of mineral oil and silicone oil remaining inside the fiber after rinsing the recycled polyurethane elastic fiber with a petroleum ether is 10 wt% or less relative to a fiber weight after the rinsing.

[2] The recycled polyurethane elastic fiber according to [1], wherein the total amount of mineral oil and silicone oil remaining inside the fiber after rinsing with the petroleum ether is 0.1 wt% or more relative to the fiber weight after the rinsing.

[3] A method for the production of the recycled polyurethane elastic fiber according to [1] or [2], wherein a dope containing a solvent having dissolved therein raw material polyurethane elastic fibers is used as a raw material of a spinning solution in production of the recycled polyurethane elastic fiber, and polyurethane elastic fibers containing mineral oil and silicone oil with a total content thereof being 20 wt% or less are used as the raw material polyurethane elastic fibers.

[4] The method according to [3], wherein polyurethane elastic fibers containing mineral oil and silicone oil with a total content thereof being 12 wt% or more account for 10 wt% or less of the total of the raw material polyurethane elastic fibers.

[5] The method according to [3] or [4], wherein only polyurethane elastic fibers having a reduced viscosity of 1.00 or more and 4.20 or less are used as the raw material polyurethane elastic fibers.

[6] The method according to any one of [3] to [5], wherein polyurethane elastic fibers having a reduced viscosity of 1.10 or more and 2.50 or less are used in the raw material polyurethane elastic fibers in an amount of 70 wt% or more of the total of the raw material polyurethane elastic fibers.

[7] The method according to any one of [3] to [6], wherein the solvent for dissolving the raw material polyurethane elastic fibers is either DMF or DMAc.

[8] The method according to any one of [3] to [7], wherein the temperature when the raw material polyurethane elastic fibers are dissolved in a solvent is 50 °C or higher and 100 °C or lower.

[9] The method according to any one of [3] to [8], wherein a solution obtained by mixing a dope containing a solvent having dissolved therein raw material polyurethane elastic fibers and a newly prepared virgin polymer solution is used as the spinning solution.

[10] A fiber structure comprising the recycled polyurethane elastic fiber according to [1] or [2].

[11] A gather member comprising the recycled polyurethane elastic fiber according to [1] or [2].
[12] A sanitary material comprising the gather member according to [11].

[ADVANTAGEOUS EFFECTS OF INVENTION]

Since the recycled polyurethane elastic fiber of the present invention can universally be used as a recycled polyurethane elastic fiber, non-standard yarn which is conventionally discarded is used as a raw material, contributing greatly to the 2 Rs (reduce and recycle).

BRIEF DESCRIPTION OF DRAWINGS

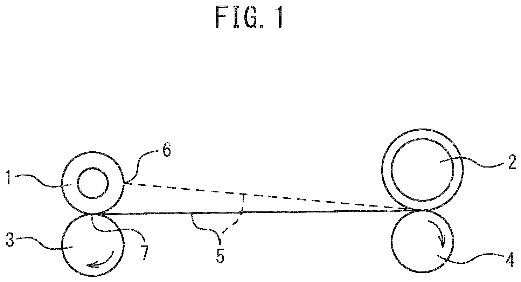

FIG. 1 is a view detailing an unwindability evaluation method.

DESCRIPTION OF EMBODIMENTS

The embodiments of the present invention will be described in detail below.

The recycled polyurethane elastic fiber of the present embodiment is a recycled polyurethane elastic fiber in which raw material polyurethane elastic fibers are used as a raw material, wherein a reduced viscosity of the recycle polyurethane elastic fiber is 1.00 or more, and a total amount of mineral oil and silicone oil remaining inside the fiber after rinsing the recycled polyurethane elastic fiber with a petroleum ether is 10 wt% or less relative to a fiber weight after the rinsing.

When the total amount of mineral oil and silicone oil remaining inside the fiber after rinsing the recycled polyurethane elastic fiber with a petroleum ether is 10 wt% or less relative to a fiber weight after rinsing, it has physical characteristics which can be used for general purposes as recycled polyurethane elastic fiber, and it can be used without problems because there is no separation between individual filaments. Examples of a method for managing the amount of internal oil agent include a method comprising managing the oil agent content of the polyurethane elastic fibers in the raw material, and a method comprising producing a dope containing a solvent having dissolved therein raw material polyurethane elastic fibers (hereinafter, also referred to as dope or recycled dope), allowing it to stand for separation, and removing the separated oil agent component.

Furthermore, it is preferable from the viewpoint of unwindability that the total amount of mineral oil and silicone oil remaining inside the fiber after rinsing with the petroleum ether be 0.1 wt% or more relative to the fiber weight after the rinsing.

The reduced viscosity of the recycled polyurethane elastic fiber of the present embodiment is 1.00 or more. Reduced viscosity has a high correlation with the molecular weight, and as long as the reduced viscosity is 1.00 or more, there is no great influence on the physical properties and the fiber can sufficiently withstand a normal heat-treatment process. Conversely, the reduced viscosity of the recycled polyurethane elastic fiber is preferably 5.00 or less from the viewpoint of spinning stability.

The recycled polyurethane elastic fiber of the present embodiment can be produced by a method in which a dope containing a solvent having dissolved therein raw material polyurethane elastic fibers is used as the raw material of the spinning solution in the production of the recycled polyurethane elastic fiber, and polyurethane elastic fibers containing mineral oil and silicone oil with a total content thereof being 20 wt% or less are used as the raw material polyurethane elastic fibers.

The raw material polyurethane elastic fibers used in the production of the recycled polyurethane elastic fiber of the present embodiment may contain an oil agent either inside the fiber or attached to the fiber surface, and it is preferable that the total content of mineral oil and silicone oil in the oil agent be within a certain range. Specifically, as the raw material polyurethane elastic fibers, the use of only polyurethane elastic fibers containing mineral oil and silicone oil with a content thereof being 0 wt% or more and 20 wt% or less is preferable from the viewpoint of managing the amount of oil agent introduced from the raw material. The total content of mineral oil and silicone oil is more preferably 0% wt% or more and 17 wt% or less, and further preferably 0% wt% or more and 15 wt% or less. Since the total content of mineral oil and silicone oil contained in the recycled polyurethane elastic fiber can be adjusted by post-adhesion as needed, the raw material polyurethane elastic fibers need not necessarily contain mineral oil and silicone oil.

Further, in the raw material polyurethane elastic fibers, polyurethane elastic fibers containing mineral oil and silicone oil with a total content thereof being 12 wt% or more preferably account for 10 wt% or less of the total of the raw material polyurethane elastic fibers. When the weight ratio of polyurethane elastic fibers containing mineral oil and silicone oil with a total content thereof being 12 wt% or more in the raw material polyurethane elastic fibers is within the range, the recycled polyurethane elastic fiber is easy to manage so that the total amount of mineral oil and silicone oil inside the fiber is 10 wt% or less relative to the weight after petroleum ether rinsing. More preferably, polyurethane elastic fibers containing mineral oil and silicone oil with a total content thereof being 10 wt% or more account for 10 wt% or less of the total of the raw material polyurethane elastic fibers. Further preferably, polyurethane elastic fibers containing mineral oil and silicone oil with a total content thereof being 8 wt% or more account for 10 wt% or less of the total of the raw material polyurethane elastic fibers.

As the method of producing the recycled polyurethane elastic fiber of the present embodiment, it is preferably that only polyurethane elastic fibers having a reduced viscosity of 1.00 or more and 4.20 or less be used as the raw material polyurethane elastic fibers. When the reduced viscosity of the raw material polyurethane elastic fiber is 1.00 or more, the physical properties of the recycled polyurethane elastic fiber after spinning are not significantly impacted, and the recycled polyurethane elastic fiber can sufficiently withstand a normal heat-treatment process. Conversely, when the reduced viscosity of the raw material polyurethane elastic fibers is 4.20 or less, the amount of the undissolved residue at the time of dope production is extremely small, and the undissolved residue, if any, can easily be removed by a filter during the process.

The reduced viscosity of the raw material polyurethane elastic fibers is more preferably 1.10 or more and 2.50 or less. Within this range, the physical properties of the obtained recycled polyurethane elastic fiber can be suppressed from varying, and the impact on the process is extremely small. Furthermore, the weight ratio of raw material polyurethane elastic fibers having a reduced viscosity of 1.10 or more and 2.50 or less is preferably 70 wt% or more of the total of the raw material polyurethane elastic fiber, and is more preferably 100 wt%.

When using polyurethane elastic fibers as a recycled raw material in dry or wet spinning, it is preferable that a dope be prepared by dissolving the fibers in either of N,N-dimethylformamide (DMF) and N,N-dimethylacetamide (DMAc) as an amide-based solvent, and be used as a raw material of the spinning solution. At this time, dissolution efficiency is increased by cutting the raw material polyurethane elastic fibers to appropriate lengths followed by dissolution. DMAc is the more preferable as the solvent from the viewpoint of ease of use.

Though the dissolution temperature at the time of preparation of the dope of the raw material polyurethane elastic fibers is not particularly limited so long as the reduced viscosity of the obtained recycled polyurethane elastic fibers is 1.00 or more, the temperature is preferably 50 °C or higher for the purpose efficient dissolution, and conversely, the temperature is preferably 100 °C or lower from the viewpoint of not reducing the molecular weight or physical characteristics of the yarn after spinning. The dissolution temperature is more preferably 60 °C or higher and 90 °C or lower.

The dope produced from raw material polyurethane elastic fibers can be used as-is as the spinning solution by appropriately adjusting the concentration. Furthermore, the dope produced from raw material polyurethane elastic fibers may be mixed with a newly prepared spinning solution (virgin spinning solution) produced from a raw material other than raw material polyurethane elastic fibers, and the mixing ratio thereof is not particularly limited.

The raw material polyurethane elastic fibers and polyurethane polymer for the virgin spinning solution used in the method of producing the recycled polyurethane elastic fibers of the present embodiment are obtained by a known method in which an active hydrogen-containing compound is reacted with a prepolymer obtained by reacting a high molecular weight diol with a diisocyanate. Examples of the polymer diol include polyester diols, polycarbonate diols, and polyether diols, and the polymer diol is preferably a polyether diol, and more preferably a polyalkylene ether diol having one or more linear or branched alkylene groups having 2 to 10 carbon atoms bonded via ether bonding.

The polyalkylene ether diol is a mono- or co-polymerized polyalkylene ether diol which has one or more linear or branched alkylene groups having 2 to 10 carbon atoms bonded via ether bonding and has a number average molecular weight of 500 to 6000. In the copolymerized polyalkylene ether diol, the alkylene groups are ether-bonded in a block shape or a random shape, and the number average molecular weight of the copolymerized polyalkylene ether diol is 500 to 6000.

Examples of the diisocyanate include known aliphatic, alicyclic, or aromatic organic diisocyanates having two isocyanate groups in the molecule, and these may be used alone or in combination. Specifically, examples thereof include organic diisocyanates such as 4,4'-diphenylmethane diisocyanate (MDI), 2,4- or 2,6-tolylene diisocyanate, p-phenylene diisocyanate, 1,5-naphthalene diisocyanate, xylylene diisocyanate, hexamethylene diisocyanate, isophorone diisocyanate, and 4,4'-dicyclohexylmethane diisocyanate, and 4,4'-diphenylmethane diisocyanate is preferable. Furthermore, a compound having a closed isocyanate group which is converted into a free isocyanate group may be used as the organic diisocyanate.

A chain extender commonly used for polyurethane polymers, i.e., a low molecular weight compound having a molecular weight of 500 or less and containing at least two hydrogen atoms capable of reacting with isocyanates can be used as the active hydrogen-containing compound which reacts with isocyanate group and used for the raw material polyurethane elastic fibers and polyurethane polymer for the virgin spinning solution used in the method of producing the recycled polyurethane elastic fibers of the present embodiment. Specific examples thereof include diamines such as ethylenediamine, propylenediamine, tolylenediamine, m-xylylenediamine, 1,3-diaminocyclohexane, isophoronediamine, hydrazine, 4,4'-diaminodiphenylmethane, dihydrazide, and piperazine, the diamine compounds disclosed in Japanese Unexamined Patent Publication (Kokai) No. 5-155841, and diols such as ethylene glycol, propylene glycol. 1,4-Butanediol, and ethylenediamine, 1,2-propylenediamine, and the diamines compound disclosed in Japanese Unexamined Patent Publication (Kokai) No. 5-155841 are preferable. These compounds may be used alone or in admixture of two or more. In some cases, they may be used in combination with a compound containing one active hydrogen which can react with isocyanate.

Regarding the method of producing a polyurethane polymer using a diisocyanate, a polymer diol, and an active hydrogen-containing compound, a known urethanization reaction technology can be used.

Known organic or inorganic heat stabilizers which are useful for polyurethane polymers, antioxidants, UV protection agents, anti-yellowing agents, heat discoloration inhibitors, sterilizing chlorine agents for pool resistance, colorants, rosins, pigments, carbon black, acrylic resins, metal soaps, fillers, etc., may further be added to the polyurethane polymer obtained in this manner. The polyurethane polymer obtained in this manner can be formed into fibers by known dry spinning, wet spinning, etc., to produce polyurethane elastic fibers.

Oil agents such as polydimethylsiloxane, polyester-modified silicone, polyether-modified silicone, amino-modified silicone, mineral oil, mineral fine particles such as silica, colloidal alumina, talc, etc., higher fatty acid metal salt powders, for example, magnesium stearate, calcium stearate, etc., higher aliphatic carboxylic acids, higher aliphatic alcohols, paraffin, polyethylene, etc., wax which is solid at room temperature, etc., may be applied along or in arbitrary combinations as needed to the polyurethane elastic fibers obtained in this manner.

The fiber structure of the present embodiment may comprise the recycled polyurethane elastic fiber of the present embodiment as one of the constituent components thereof, and examples of the fiber structure include fabrics (woven fabric, knitted fabric, non-woven fabric, pile fabric, etc.) and string-like material (dipped cord, rope, tape, fishing net, plaited cord, etc.).

The material settings when the recycled polyurethane elastic fiber of the present embodiment is combined with another material to form a fiber structure are not particular limited, and examples thereof include cellulose fibers, protein fibers, polyolefin fibers, polyacrylic fibers, and polyamide, polyester, and polyurethane elastic fibers.

The recycled polyurethane elastic fibers of the present embodiment or fiber structure comprising these fibers can suitably be used in tights, pantyhose, foundation garments, sock closures, rubber apertures, corsets, surgical bandages, and woven and knitted swimwear, and in particular, they ARE Preferably used in innerwear, outerwear, legs, sportswear, jeans, and swimwear.

A gather member comprising the recycled polyurethane elastic fibers of the present embodiment and a sanitary material including the same are also aspects of the present invention. Specific examples of sanitary materials include disposable paper diapers, absorbent articles such as sanitary products, masks, bandages, etc. In paper diapers, gather members in which elastic fibers are adhered to a non-woven fabric via hot melt are used at the waist and around the legs. The gather member of the present embodiment can suitably be used in such sites in the same manner as conventional polyurethane elastic fibers.

EXAMPLES

The preset invention will be specifically described below by way of Examples and Comparative Examples. The preset invention is not limited to only these Examples. The various measurement methods described in the Examples were carried out using the methods described below. The evaluation results are shown in Table 1 below.

(1) Recycled Polyurethane Elastic Fiber Spinning Method

After defoaming the spinning solution for the recycled polyurethane elastic fiber under reduced pressure, the solvent was evaporated by spraying it into hot air under a nitrogen atmosphere from the holes of a spinning nozzle (the nozzle has two pores) using a 400-mesh wire mesh filter as the spinner filter. The dried yarn was passed through a godet roller, and an oil agent component containing polyalkylsiloxane and mineral oil as main components was adhered to the polyurethane elastic fibers at approximately 5 wt% on an oiling roller, and 500 g of 22 dtex/2 filament (single yarn fineness 11 dtex) polyurethane elastic fibers were wound on a paper tube in a speed range of 600 m/min or more and 1000 m/min or less. Various evaluations were performed using these polyurethane elastic fibers. Generally, 22 dtex polyurethane elastic fibers preferably have a high breaking strength and a high breaking elongation, but can be used for general purposes when having a breaking strength of 25 cN or more and a breaking elongation of 550% or more as the physical properties thereof.

(2) Method for Measuring Reduced Viscosity of Recycled Polyurethane Elastic Fibers and Raw Material Polyurethane Elastic Fibers

Measurement was performed at 25 °C using a Ubbelohde viscometer in accordance with the method of JIS K7367-1. However, the weight concentration was used as the solution concentration, and the sample was dissolved so as to achieve 0.50 wt%. The solvent used was N,N-dimethylacetamide. The resulting insoluble material was settled by centrifugation and the supernatant was used for the measurement. As a pretreatment, the oil agent component outside or contained inside the polyurethane elastic fibers was removed. Specifically, approximately 3 g of polyurethane elastic fibers were used, Soxhlet extraction was performed with 300 g of hexane for 5 hours, and the treated recycled polyurethane elastic fibers were sufficiently dried and used.

(3) Method for Measuring Total Weight Ratio (wt%) of Mineral Oil and Silicone Oil in Recycled Polyurethane Elastic Fibers

The petroleum ether was added such that the recycled polyurethane elastic fibers (approximately 3 g) were soaked, stirred lightly, and the petroleum ether was discarded. This operation was repeated three times to rinse off the oil agent component on the surface, and then the recycled polyurethane elastic fibers were suitably dried and weighed. The dried sample was subjected to Soxhlet extraction with 300 g of hexane for 5 hours. The extracted hexane was concentrated, and then purified and concentrated by silica gel column chromatography using hexane as a developing solvent. The residual weight and precise weight of the obtained mineral oil and silicone oil were used as the total weight ratio of the mineral oil and the silicone oil contained inside the recycled polyurethane elastic fibers.

(4) Method for Measuring Total Weight Ratio (wt%) of Mineral Oil and Silicone Oil Contained in Raw Material Polyurethane Elastic Fibers

The raw material polyurethane elastic fiber (approximately 3 g) was precisely weighed, and Soxhlet extraction with 300 g of hexane was performed for 5 hours. The extracted hexane was concentrated, and then purified and concentrated by silica gel column chromatography using hexane as a developing solvent. The residual weight and precise weight of the obtained mineral oil and silicone oil were used as the total weight ratio of the mineral oil and the silicone oil contained inside the recycled polyurethane elastic fibers.

(5) Measurement of Breaking Strength [cN] and Breaking Elongation [%]

Using a tensile tester (trade name Tensilon RTG-1210 manufactured by Orientec Co., Ltd.), the tensile breaking strength and elongation of a test yarn having a sample length of 5 cm was measured at a speed of 50 cm/min under the conditions of 20 °C and 65% humidity. Seven points were measured for each test yarn, and the average of five points excluding the one with the largest value and the one with the smallest value was calculated.

(6) Measurement of Cohesive Stress of Polyurethane Elastic Fibers [cN]

The sample was set in a tensile tester (trade name Tencilon RTG-1210 manufactured by Orientec Co., Ltd.) at a gripping interval of 50 mm, and measured by the following method under the conditions of a temperature of 20 °C and a humidity of 65 wt%. A single 22 decitex/2 filament yarn was divided into two. After each of the divided filaments was set on upper and lower chucks so as to tear separately, the stress measurement was started by the same method as the strong elongation measurement.

During measurement so as to tear a single yarn, the stress is high in the part where the bond is strong, and the value thereof is low in the part where the bond is weak. Thus, the value fluctuates up and down as measurement progresses. The average of the maximum and minimum values of the measured stress was taken as the cohesive stress. Seven points were measured for each test yarn, and the average of five points excluding the one with the largest value and the one with the smallest value was calculated. It can be judged that the sample elastic yarn having a small fluctuation range and a large average stress has a strong filament cohesiveness and is suitable.

(7) Unwindability Evaluation

As shown in FIG. 1, an elastic fiber spool (1) to which an oil agent was attached was set on the unwinding side of an unwinding speed ratio measurement machine, and a paper tube (2) for winding was set on the winding side. After setting the winding speed to a constant speed, rollers (3) and (4) were started at the same time. In this state, substantially no tension is applied to the yarn (5), so that the yarn sticks on the cheese and does not separate, and the unwinding point (6) is in the state shown in FIG. 1. Since the unwinding point (6) of the yarn (5) from the cheese changes by changing the unwinding speed, the unwinding speed was set so that this point coincides with the contact point (7) between the cheese and the roller. The unwinding speed ratio was calculated by the following formula. The smaller this value is, the better the unwindability. After winding on cheese and storing at room temperature for 30 days, the unwinding speed ratio was calculated by the following formula:

$$\text{Unwinding speed ratio } (\%) = (\text{winding speed - unwinding speed}) \div \text{unwinding speed} \times 100).$$

The unwindability was evaluated according to the following evaluation criteria.

[Evaluation Criteria]

| Excellent: | Unwinding speed ratio of less than 60% |
|---|---|
| Good: | Unwinding speed ratio of 60% or more and less than 65% |
| Good to Fair: | Unwinding speed ratio of 65% or more and less than 70% |
| Fair: | Unwinding speed ratio of 70% or more and less than 80% |
| Poor: | Unwinding speed ratio of 80% or more |

(8) Preparation of Raw Material Polyurethane Elastic Fibers

A DMAc solution of polyurethane having a molecular weight of 2000 and consisting of PTMG, MDI, ethylenediamine, and diethylamine was polymerized by a conventional method to prepare a DMAc polymer solution. At this time, the molar ratio of MDI and polyol and the molar ratio of ethylenediamine and diethylamine were variously adjusted, and raw material polyurethane elastic fibers were prepared in accordance with <(1) Spinning Method of Recycled Polyurethane Elastic Fibers> above except that the amount of the oil agent applied was variously adjusted, and the reduced viscosity and the oil agent content were measured in advance. Note that when (the number of moles of MDI) / (the number of moles of polyol) approaches 1, the molecular weight of the so-called prepolymer increases. The amount of amine is determined by the amount of unreacted isocyanate moiety, but the smaller the ratio of diethylamine at that time, the larger the molecular weight of polyurethane. By appropriately adjusting and combining these ratios, the molecular weight of the spinnable polymer, i.e., the reduced viscosity, can be adjusted. Further, as the oil agent, the oil agent described in Example 3 of Japanese Patent No. 4731048 was used.

[Reference Example 1] (Polyurethane Elastic Fibers Manufactured Using Virgin Polymer)

A DMAc solution of polyurethane composed of PTMG, MDI, and ethylenediamine having a molecular weight of 1800 was polymerized by a conventional method to prepare a DMAc polymer solution. At this time, (the number of moles of MDI) / (number of moles of polyol) was set to 1.60, the solution concentration was adjusted to 30%, and polyurethane elastic fiber was obtained in accordance with <(1) Spinning Method of Recycled Polyurethane Elastic Fibers> above.

[Examples 1 to 9 and Comparative Examples 1 and 2]

Using a plurality of types of raw material polyurethane elastic fibers, DMAc solution dopes were prepared after adjusting the reduced viscosity and the range of the oil agent content. These were mixed with the DMAc polymer solution of Reference Example 1 as necessary to obtain polyurethane elastic fibers in accordance with <(1) Spinning Method of Recycled Polyurethane Elastic Fibers> above. The details of the detailed conditions for producing the recycled dopes, the mixing ratios with the virgin polymer, the spinning conditions, and the physical property evaluation results of the obtained polyurethane elastic fibers are shown in Table 1 below. The evaluation of unwindability was performed only for Examples 8 and 9.

[Table 1]

| Production Conditions/Structure/Performance | Unit | Ref Ex | Ex 1 | Ex 2 | Ex 3 | Ex 4 | Ex 5 | Ex 6 | Ex 7 | Ex 8 | Ex 9 | Comp Ex 1 | Comp Ex 2 |
|---|---|---|---|---|---|---|---|---|---|---|---|---|---|
| Mineral oil and silicone oil total content range of raw material polyurethane elastic fiber | wt% | - | 3.6 to 6.7 | 3.9 to 7.1 | 0 to 4.4 | 0 to 5.5 | 6.8 to 12.2 | 3.4 to 8.2 | 7.7 to 20.6 | 4.8 to 9.3 | 0 | 10.3 to 20.8 | 5.9 to 13.3 |
| Reduced viscosity range of raw material polyurethane elastic fiber | - | - | 1.23 to 1.55 | 1.33 to 3.75 | 1.23 to 3.35 | 0.92 to 4.50 | 1.02 to 2.40 | 1.23 to 3.35 | 1.13 to 2.80 | 1.23 to 1.55 | 1.35 to 1.50 | 0.92 to 5.02 | 0.88 to 1.21 |
| Total amount of mineral oil and silicone oil of rinsed recycled polyurethane elastic fiber | wt% | - | 5.5 | 4.3 | 1.1 | 3.9 | 8.3 | 5.2 | 9.1 | 6.6 | 0.05 | 13.2 | 7.8 |
| Reduced viscosity of recycled polyurethane elastic fiber | - | - | 1.34 | 1.56 | 2.57 | 1.60 | 1.11 | 1.49 | 1.61 | 1.29 | 1.42 | 2.21 | 0.95 |
| Ratio of raw material polyurethane elastic fiber having mineral oil and silicone oil total content of 20 wt% or less | wt% | - | 100 | 100 | 100 | 100 | 100 | 100 | 95 | 100 | 100 | 90 | 100 |

EP 4 036 288 A1

| Production Conditions/Structure/Performance | Unit | Ref Ex | Ex 1 | Ex 2 | Ex 3 | Ex 4 | Ex 5 | Ex 6 | Ex 7 | Ex 8 | Ex 9 | Comp Ex 1 | Comp Ex 2 |
|---|---|---|---|---|---|---|---|---|---|---|---|---|---|
| Ratio of raw material polyurethane elastic fiber having mineral oil and silicone oil total content of 12 wt% or more | wt% | - | 0 | 0 | 0 | 0 | 13 | 0 | 12 | 0 | 0 | 20 | 8 |
| Ratio of raw material polyurethane elastic fiber having reduced viscosity in range of 1.00 to 4.20 | wt% | - | 100 | 100 | 100 | 90 | 100 | 100 | 100 | 100 | 100 | 73 | 29 |
| Ratio of raw material polyurethane elastic fiber having reduced viscosity in range of 1.10 to 2.50 | wt% | - | 100 | 80 | 27 | 82 | 31 | 92 | 89 | 100 | 100 | 30 | 18 |
| Solvent for dissolving raw material polyurethane elastic fiber | - | - | DMAc | DMAc | DMAc | DMAc | DMAc | DMAc | DMAc | DMAc | DMAc | DMAc | DMAc |

| Production Conditions/Structure/Performance | Unit | Ref Ex | Ex 1 | Ex 2 | Ex 3 | Ex 4 | Ex 5 | Ex 6 | Ex 7 | Ex 8 | Ex 9 | Comp Ex 1 | Comp Ex 2 |
|---|---|---|---|---|---|---|---|---|---|---|---|---|---|
| Melting temperature of raw material polyurethane elastic fiber | °C | - | 60 | 60 | 60 | 60 | 60 | 60 | 60 | 130 | 60 | 60 | 60 |
| Recycled dope ratio in spinning solution | wt% | 0 | 100 | 50 | 100 | 100 | 100 | 100 | 100 | 100 | 100 | 100 | 100 |
| Filter clogging | - | Good | Good | Good | Fair | Good | Good | Good | Good | Good | Good | Poor | Good |
| Spinnability, yarn breakage | - | Good | Good | Good | Fair | Good | Fair | Good | Fair | Good | Good | Poor | Fair |
| Breaking strength/ breaking elongation | cN/dtex /% | 32.4/688 | 32.5/674 | 33.3/670 | 34.6/570 | 30.9/621 | 26.4 / 595 | 33.5/613 | 27.8/595 | 29.5/613 | 32.5/631 | 15.2/370 | 23.2/510 |
| Cohesive stress | cN/dtex | 0.08 | 0.06 | 0.06 | 0.09 | 0.04 | 0.02 | 0.04 | 0.02 | 0.04 | 0.08 | 0.01 | 0.03 |
| Unwindability | % | - | - | - | - | - | - | - | - | Excellent | Good to Fair | - | - |

INDUSTRIAL APPLICABILITY

Since the recycled polyurethane elastic fiber of the present invention can universally be used as a recycled polyurethane elastic fiber, non-standard yarn which is conventionally discarded is used as a raw material, contributing greatly to the 2 Rs (reduce and recycle).

REFERENCE SIGNS LIST

1    elastic fiber spool
2    winding-side paper tube
3    roller
4    roller
5    yarn
6    unwinding point
7    contact point

**Claims**

1. A recycled polyurethane elastic fiber from raw material polyurethane elastic fibers used as a raw material, wherein a reduced viscosity of the recycle polyurethane elastic fiber is 1.00 or more, and a total amount of mineral oil and silicone oil remaining inside the fiber after rinsing the recycled polyurethane elastic fiber with a petroleum ether is 10 wt% or less relative to a fiber weight after the rinsing.

2. The recycled polyurethane elastic fiber according to claim 1, wherein the total amount of mineral oil and silicone oil remaining inside the fiber after rinsing with the petroleum ether is 0.1 wt% or more relative to the fiber weight after the rinsing.

3. A method for the production of the recycled polyurethane elastic fiber according to claim 1 or 2, wherein a dope containing a solvent having dissolved therein raw material polyurethane elastic fibers is used as a raw material of a spinning solution in production of the recycled polyurethane elastic fiber, and polyurethane elastic fibers containing mineral oil and silicone oil with a total content thereof being 20 wt% or less are used as the raw material polyurethane elastic fibers.

4. The method according to claim 3, wherein polyurethane elastic fibers containing mineral oil and silicone oil with a total content thereof being 12 wt% or more account for 10 wt% or less of the total of the raw material polyurethane elastic fibers.

5. The method according to claim 3 or 4, wherein only polyurethane elastic fibers having a reduced viscosity of 1.00 or more and 4.20 or less are used as the raw material polyurethane elastic fibers.

6. The method according to any one of claims 3 to 5, wherein polyurethane elastic fibers having a reduced viscosity of 1.10 or more and 2.50 or less are used in the raw material polyurethane elastic fibers in an amount of 70 wt% or more of the total of the raw material polyurethane elastic fibers.

7. The method according to any one of claims 3 to 6, wherein the solvent for dissolving the raw material polyurethane elastic fibers is either DMF or DMAc.

8. The method according to any one of claims 3 to 7, wherein the temperature when the raw material polyurethane elastic fibers are dissolved in a solvent is 50 °C or higher and 100 °C or lower.

9. The method according to any one of claims 3 to 8, wherein a solution obtained by mixing a dope containing a solvent having dissolved therein raw material polyurethane elastic fibers and a newly prepared virgin polymer solution is used as the spinning solution.

10. A fiber structure comprising the recycled polyurethane elastic fiber according to claim 1 or 2.

**11.** A gather member comprising the recycled polyurethane elastic fiber according to claim 1 or 2.

**12.** A sanitary material comprising the gather member according to claim 11.

# FIG. 1

## INTERNATIONAL SEARCH REPORT

| | International application No. |
|---|---|
| | PCT/JP2020/035846 |

**A. CLASSIFICATION OF SUBJECT MATTER**

D01F 6/70(2006.01)i
FI: D01F6/70 Z

According to International Patent Classification (IPC) or to both national classification and IPC

**B. FIELDS SEARCHED**

Minimum documentation searched (classification system followed by classification symbols)
D01F6/70

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | CN 101096781 A (YANTAI SPANDEX CO., LTD.) 02 January 2008 (2008-01-02) claims 1, 2, examples | 1-10 |
| Y | WO 97/00982 A1 (ASAHI KASEI INDUSTRY CO., LTD.) 09 January 1997 (1997-01-09) page 17, lines 14-16 | 1-10 |
| Y | JP 8-246238 A (KURARAY CO., LTD.) 24 September 1996 (1996-09-24) paragraph [0028] | 1-10 |
| Y | WO 2014/112588 A1 (TORAY OPELONTEX CO., LTD.) 24 July 2014 (2014-07-24) example 2, paragraphs [0057], [0183] | 1-10 |
| X | example 2, paragraphs [0057], [0183] | 1, 10-12 |
| Y | JP 2002-538314 A (BAYER FASER GMBH) 12 November 2002 (2002-11-12) claim 1 | 9 |
| A | CN 101760799 A (LIANYUNGANG RONGRUN RENEWABLE RESOURCES CO., LTD.) 30 June 2010 (2010-06-30) | 1-12 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 October 2020 (27.10.2020) | 10 November 2020 (10.11.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/035846

| Patent Documents referred in the Report | Publication Date | Patent Family | Publication Date |
|---|---|---|---|
| CN 101096781 A | 02 Jan. 2008 | (Family: none) | |
| WO 97/00982 A1 | 09 Jan. 1997 | US 5879799 A<br>column 11, lines 4-8<br>EP 872581 A1<br>DE 69626850 T<br>KR 10-0270432 B1<br>TW 334454 B<br>KR 10-1999-0028350 A | |
| JP 8-246238 A | 24 Sep. 1996 | US 5606005 A<br>column 10, lines 49-59<br>EP 924183 A1<br>DE 69518812 T<br>CA 2161824 A<br>KR 10-1996-0017956 A<br>CN 1133303 A<br>TW 301659 B<br>CA 2161824 A1 | |
| WO 2014/112588 A1 | 24 Jul. 2014 | US 2016/0002827 A1<br>example 2, paragraphs<br>[0065], [0222]<br>EP 2947185 A1<br>CN 104937149 A<br>HK 1211326 A | |
| JP 2002-538314 A | 12 Nov. 2002 | US 6830715 B1<br>claim 1<br>WO 2000/050673 A1<br>EP 1163381 A1<br>DE 19907830 A<br>AU 3154500 A<br>BR 8485 A<br>TW 469305 B<br>IL 144576 D<br>CA 2362175 A<br>HK 1045179 A<br>CN 1341170 A<br>KR 10-2001-0102353 A<br>MX PA01008560 A | |
| CN 101760799 A | 30 Jun. 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017519121 W
- CN 106757490
- CN 108517580
- JP 5155841 A
- JP 4731048 B